# EUROPÄISCHE PATENTANMELDUNG

(11) **EP 1 006 698 A2**
(43) Veröffentlichungstag der Anmeldung: **07.06.2000**
(21) Anmeldenummer: 99440338.4
(22) Anmeldetag: 02.12.1999
(51) Int. Cl.: H04L 25/03

(54) **Entzerrer, insbesondere für Systeme mit optischer Übertragung**

(30) Priorität: 03.12.1998 DE 19855707
(71) Anmelder: ALCATEL, 75008 Paris (FR)
(72) Erfinder: Heidemann, Rolf, 71732 Tamm (DE); Schlag, Erwin, 71665 Vaihingen (DE); Schaepperle, Jörg, 70180 Stuttgart (DE); Fussgänger, Kurt, 71686 Remseck (DE)
(74) Vertreter: Rausch, Gabriele, Dr.

(57) **Zusammenfassung**

Die Erfindung betrifft einen Equalizer (1) zum Entzerren eines elektrischen Signals (2) in Übertragungssystemen, vorzugsweise mit hohen Bitraten. Um mit einem solchen Equalizer (1) auch Verzerrungen in Übertragungssystemen mit hohen Bitraten zuverlässig ausgleichen zu können, schlägt die Erfindung einen Equalizer (1) vor mit
- einerEntzerrungseinheit (3), die das elektrische Signal (2) entzerrt,
- einem ersten Monitor (A), der einen Verlauf des entzerrten Signals (4) an mehreren Messpunkten (5) misst,
- einem zweiten Monitor (B), der einen Verlauf des elektrischen Signals (2) an mehreren Messpunkten (6) misst,
- einer Vergleichseinheit (7) zur Erzeugung eines Vergleichsignals (13), und
- einer Stelleinheit (9), die die Entzerrungseinheit (3) in Abhängigkeit von dem Vergleichsignal(13) ansteuert.

## Beschreibung

Die vorliegende Erfindung betrifft einen Equalizer zum Entzerren eines elektrischen Signals in optischen Übertragungssystemen.

In derartigen Übertragungssystemen können Daten mit mehreren Gbit/s übertragen werden. Diese Übertragungssysteme verwenden üblicherweise Lichtwellenleiter, um die Daten mit hohen Bitraten über weite Strecken übertragen zu können. Falls die Daten auf der Senderseite als analoge Signale vorliegen, werden diese durch einen A/D-Wandler zunächst in binäre elektrische Signale umgewandelt. Die binären elektrischen Signale werden dann durch einen elektrooptischen Wandler in binäre optische Signale umgewandelt und in den Lichtwellenleiter eingekoppelt. Auf der Empfangsseite werden die optischen Signale aus dem Lichtwellenleiter ausgekoppelt und durch einen optoelektronischen Wandler in elektrische Signale umgewandelt. Durch die Verzerrungen im Lichtwellenleiter sind die optischen Signale auf der Empfangsseite nicht mehr binär. Im Empfänger wandelt beispielsweise ein Entscheider die verzerrten elektrischen Signale wieder in binäre Signale um. Die elektrischen Signale werden ggf. durch einen D/A-Wandler in analoge elektrische Signale umgewandelt.

Bei besonders hohen Bitraten, d. h. ab einer Bitrate von etwa 10 Gbit/s, kann es aufgrund von unterschiedlichen Ausbreitungsgeschwindigkeiten des optischen Signals in den zwei Hauptachsen des Lichtwellenleiters zu einer besonders starken Verzerrung des binären optischen Signals kommen. Diese Verzerrung wird als Polarisations - Moden-Dispersion (PDM) bezeichnet. Das verzerrte optische Signal wird von dem optoelektronischen Wandler im Empfänger in ein elektrisches Signal umgewandelt, das diese Verzerrungen ebenfalls aufweist. Das verzerrte elektrische Signal wird durch einen Entscheider in ein binäres elektrisches Signal gewandelt. Um die Fehlerim Entscheider möglichst gering zu halten und um so ein Verfälschen der zu übertragenden Daten möglichst zu vermeiden, muß das Signal vor dem Entscheider entzerrt werden.

Die PDM des optischen Signals kann bis zu einer Bitrate von etwa 40 Gbit/s durch die Wahl geeigneter Materialien für den Lichtwellenleiter vermindert werden. Ab einer Bitrate von etwa 40 Gbit/sec bedarf es jedoch einer aktiven Entzerrung des Signals. Die Verzerrungen des Signals aufgrund von anderen störenden Einflüssen müssen ebenfalls mittels einer aktiver Entzerrung vermindert werden.

Die Entzerrung des Signals kann bspw. im Bereich der optischen Übertragungsstrecke erfolgen. Das ist jedoch sehr aufwendig, da dabei die Polarisation des optischen Signals beeinflußt werden muß. Die Entzerrung des Signals kann aber auch im Bereich der elektrischen Übertragungsstrecke, d. h. nachdem der optoelektronische Wandler das optische Signal in ein elektrisches Signal umgewandelt hat, erfolgen. Bei der vorliegenden Erfindung erfolgt die Entzerrung im Bereich der elektrischen Übertragungsstrecke.

Das binäre elektrische Signal hat idealerweise einen rechteckigen Signalverlauf und weist zu den diskreten Zeitpunkten entweder den Wert 1 oder den Wert 0 auf. Wird ein binäres elektrisches Signal, das mehrerer 0- und 1-Zustände enthält, mit sich selbst mehrfach überlagert, indem es bei jeder Überlagerung um eine Bitperiode verzögert wird, so ergibt sich daraus eine Signaldarstellung, die als Augendiagramm bezeichnet wird.
Die störenden Einflüsse auf der optischen Übertragungsstrecke wirken sich auch in dem Augendiagramm des elektrischen Signals aus. Ein stark gestörtes Übertragungssignal weist einen geringere Augenöffnung auf als ein ungestörtes Übertragungssignal.

Aus dem Stand der Technik ist es bekannt ein elektrisches Signal mittels eines adaptiven Equalizers zu entzerren. Um den Equalizer dahingehend zu optimieren, dass die Augenöffnung möglichst groß ist, wird zunächst das Augenmuster des entzerrten Signals an mehreren Punkten in einem Monitor in zeitlich aufeinander folgenden Schritten über der Zeit und der Amplitude erfaßt. Der Equalizer weist erste Mittel zum Einstellen der Laufzeit und zweite Mittel zum Einstellen der Amplitude des elektrischen Signals auf. Zur Optimierung des Equalizers werden diese Mittel dann in Abhängigkeit von dem erfaßten Augenmuster angesteuert. Dieser bekannte Equalizer hat den Nachteil, dass er nur für relativ geringe Bitraten geeignet ist, da das Augenmuster in zeitlich aufeinander folgenden Schritten erfaßt wird.

Deshalb ist es die Aufgabe der vorliegenden Erfindung, einen Equalizer der eingangs genannten Art dahingehend auszugestalten und weiterzubilden, dass der Equalizer auch Verzerrungen in Übertragungssystemen mit hohen Bitraten zuverlässig ausgleichen kann.

Zur Lösung dieser Aufgabe schlägt die Erfindung ausgehend von dem Equalizer der eingangs genannten Art einen Equalizer vor, der gekennzeichnet ist durch
- eine Entzerrungseinheit, die das elektrische Signal entzerrt,
- einen ersten Monitor, der einen Verlauf des entzerrten Signals an mehreren Meßpunkten misst,
- einen zweiten Monitor, der einen Verlauf des elektrischen Signals an mehreren Meßpunkten misst,
- eine Vergleichseinheit zur Erzeugung eines Vergleichsignals, das abhängig ist von den Meßergebnissen der Meßpunkte des ersten Monitors und von den Meßergebnissen der Meßpunkte des zweiten Monitors, und
- eine Stelleinheit, die die Entzerrungseinheit in Abhängigkeit von dem Vergleichsignal ansteuert.

Ein Meßpunkt istdefiniert durch einen Einstellung der Schwelle und der Phase des zugehörigen Monitor-Entscheiders. Messen bedeutet dabei zu entscheiden, ob das Signal an den durch die eingestellte Phase gekennzeichneten Entscheidungspunkten größer oder kleiner als sie eingestellte Schwelle ist.

Vorteilhafterweise misst der erste Monitor den Verlauf des entzerrten Signals an mehreren Meßpunkten gleichzeitig. Ebenso misst der zweite Monitor den Verlauf des elektrischen Signals an mehreren Meßpunkten vorzugsweise gleichzeitig.

Bei dem erfindungsgemäßen Equalizer wird das von der Entzerrungseinheit entzerrte Signal, das sog. "gute" Auge, von dem ersten Monitor in Echtzeit gemessen. Die Messungen an den einzelnen Meßpunkten in dem ersten Monitor können gleichzeitig erfolgen. Ebenso können die Messungen des verzerrten Signals, des sog. "rohen" Auges, in Echtzeit und gleichzeitig an den einzelnen Meßpunkten in dem zweiten Monitor erfolgen. Die Meßergebnisse des ersten und zweiten Monitors werden in der Vergleichseinheit ebenfalls in Echtzeit miteinander verglichen. Das durch den Vergleich der Meßergebnisse gebildete Vergleichsignal wird an die Stelleinheit weitergeleitet, die dann die Entzerrungseinheit mittels eines Stellsignals in Abhängigkeit von dem Vergleichsignal ansteuert.

Durch die Messung der Signale in den Monitoren an allen Meßpunkten gleichzeitig, können mit dem erfindungsgemäßen Equalizer auch Signale mit einer besonders hohen Bitrate entzerrt werden. So ist es ohne weiteres möglich, mit dem erfindungsgemäßen Equalizer Signale mit einer Bitrate von etwa 40 Gbit/sec zu entzerren.

Gemäß einer vorteilhaften Weiterbildung der vorliegenden Erfindung wird vorgeschlagen, dass der Equalizer eine Verzögerungseinheit aufweist, die das elektrische Signal zeitlich verzögert, bevor es an den zweiten Monitor gelangt. Die zeitliche Verzögerung durch die Verzögerungseinheit ist vorteilhafterweise gleich groß wie die zeitliche Verzögerung durch die Entzerrungseinheit. Auf diese Weise kann sichergestellt werden, dass das elektrische Signal zum gleichen Zeitpunkt an dem zweiten Monitor anliegt, zu dem auch das entzerrte Signal an dem ersten Monitor anliegt. Dadurch muß beim Vergleich der Meßergebnisse an den Meßpunkten der beiden Monitore keine zeitliche Verschiebung der beiden Signale zueinander berücksichtigt werden.

Der erste Monitor weist vorzugsweise vier auf den Ecken eines Rechtecks angeordnete Meßpunkte auf. Auch der zweite Monitor weist vorzugsweise vier auf den Ecken eines Rechtecks angeordnete Meßpunkte auf.

Die Vergleichseinheit weist vorzugsweise Mittel zum Vergleich der Meßergebnisse der Meßpunkte des ersten Monitors mit den Meßergebnissen der Meßpunkte des zweiten Monitors auf. Die vier Meßpunkte je Monitor ermöglichen eine ausreichend genaue Messung des Augenmusters des "guten" Auges und des "rohen" Auges. Die Messungen der Augenmuster erfolgen analog. Es wird die Amplitude und die zeitliche Öffnung der Signale gemessen.

Um den Zeitbedarf zur Optimierung des Equalizers weiter reduzieren zu können, wird gemäß einer bevorzugten Ausführungsform der Erfindung vorgeschlagen, dass der Vergleich der Meßergebnisse der Meßpunkte des ersten Monitors mit den Meßergebnissen der entsprechenden Meßpunkte des zweiten Monitors zeitgleich erfolgt.

Gemäß einer weiteren bevorzugten Ausführungsform der vorliegenden Erfindung ist das Vergleichsignal abhängig von dem Ergebnis des Vergleichs der Meßergebnisse der Meßpunkte des ersten Monitors mit den Meßergebnissen der entsprechenden Meßpunkte des zweiten Monitors.

Gemäß einer vorteilhaften Weiterbildung weisen der erste Monitor und der zweite Monitor jeweils einen fünften Meßpunkt auf, der im Mittelpunkt der anderen vier Meßpunkte angeordnet ist. Diese fünften Meßpunkte des ersten und des zweiten Monitors liefern einen Referenzmeßwert.

Die Vergleichseinheit weist vorzugsweise Mittel zum Vergleich der Meßergebnisse der ersten vier Meßpunkte mit dem Meßergebnis des fünften Meßpunktes des ersten Monitors und Mittel zum Vergleich der Meßergebnisse der ersten vier Meßpunkte mit dem Meßergebnis des fünften Meßpunktes des zweiten Monitors auf.

Um die Optimierung des Equalizers in möglichst kurzen aufeinander folgenden zeitlichen Abständen durchführen zu können, damit auch in Übertragungssystemen mit besonders hohen Bitraten eine Entzerrung des Signals möglich ist, wird gemäß einer bevorzugten Ausführungsform vorgeschlagen, dass der Vergleich der Meßergebnisse der ersten vier Meßpunkte mit dem Meßergebnis des fünften Meßpunkts zeitgleich in dem ersten Monitor und in dem zweiten Monitor erfolgt. D. h., dass der Vergleich des ersten Meßpunkts mit dem fünften Meßpunkt des ersten Monitors zeitgleich mit dem Vergleich des ersten Meßpunkts mit dem fünften Meßpunkt des zweiten Monitors erfolgt. Danach erfolgt der Vergleich der weiteren Meßpunkte mit den fünften Meßpunkten ebenfalls zeitgleich in dem ersten Monitor und in dem zweiten Monitor.

Gemäß einer anderen Ausführungsform der Erfindung wird vorgeschlagen, dass der Vergleich der Meßergebnisse der ersten vier Meßpunkte mit dem Meßergebnis des fünften Meßpunkts in dem ersten Monitor und in dem zweiten Monitor zeitgleich erfolgt. D. h., dass der Vergleich für alle vier Meßpunkte mit dem fünften Meßpunkt des ersten Monitors gleichzeitig erfolgt. Das gleiche gilt für den Vergleich für die vier Meßpunkte mit dem fünften Meßpunkt des zweiten Monitors.

Gemäß einer bevorzugten Weiterbildung der Erfindung wird vorgeschlagen, dass das Vergleichsignalabhängig ist von dem Ergebnis des Vergleichs der Meßergebnisse der ersten vier Meßpunkte mit dem Meßergebnis des fünften Meßpunkts des ersten Monitors und des zweiten Monitors.

Des weiteren schlägt die Erfindung gemäß einer besonders bevorzugten Ausführungsform vor, dass die Entzerrungseinheit erste Mittel zum Einstellen der Laufzeit des elektrischen Signals und zweite Mittel zum Einstellen der Amplitude des elektrischen Signals aufweist, wobei die Stelleinheit die ersten Mittel und die zweiten Mittel mittels eines Stellsignals ansteuert. Durch Ansteuern der ersten und zweiten Mittel der Entzerrungseinheit kann das Augenmuster des entzerrten Signals gezielt beeinflußt werden.

Gemäß einer vorteilhaften Weiterbildung wird vorgeschlagen, dass die Entzerrungseinheit dritte Mittel zum Aufspalten des elektrischen Signals in ein Grundsignal und in ein Korrektursignal aufweist, dass durch die ersten Mittel die Laufzeit des Korrektursignals und durch die zweiten Mittel die Amplitude des Korrektursignals einstellbar ist, und dass die Entzerrungseinheit vierte Mittel zum Addieren des Korrektursignals mit eingestellter Laufzeit und eingestellter Amplitude zu dem Grundsignal aufweist. Durch Ansteuern der erste und zweiten Mittel durch die Stelleinheit kann das Augenmuster des Korrektursignals und damit des entzerrten Signals gezielt beeinflußt werden.

Vorteilhafterweise weist die Entzerrungseinheit zwei erste Mittel auf. Ebenso weist die Entzerrungseinheit zwei zweite Mittel auf.

Die Stelleinheit steuert die Entzerrungseinheit derart an, dass die Augenöffnung des entzerrten Signals möglichst groß ist. Je größer die Augenöffnung des entzerrten Signals ist, desto mehr gleicht der Signalverlauf des entzerrten Signals dem Rechteck-Signalverlauf des idealen Signals. Auf diese Weise können die Bit-Fehler so gering wie möglich gehalten werden und eine Verfälschung der zu übertragenden Daten kann nahezu ganz verhindert werden.

Um die Augenöffnung des entzerrten Signals möglichst groß auszubilden, wird vorgeschlagen, dass die Stelleinheit die Entzerrungseinheit derart ansteuert, dass ein aus den Meßergebnisse der Meßpunkte des ersten Monitors und der Meßergebnisse der Meßpunkte des zweiten Monitors abgeleitetes Vergleichsignal möglichst groß wird.

Gemäß einer besonders bevorzugten Weiterbildung der Erfindung wird vorgeschlagen, dass der Equalizer als eine integrierte Schaltung ausgebildet ist. Die integrierte Schaltung kann bspw. in der SiGe-Technik ausgebildet sein.

Eine bevorzugte Ausführungsform der vorliegenden Erfindung wird im Folgenden anhand der Zeichnungen näher erläutert. Es zeigen:
- Fig. 1: einen erfindungsgemäßen Equalizer gemäß einer bevorzugten Ausführungsform;
- Fig. 2: den Signalverlauf von zwei verzerrten Signalen; und
- Fig. 3: den Signalverlauf von zwei entzerrten Signalen
- Fig. 4: eine Equalizereinheit.

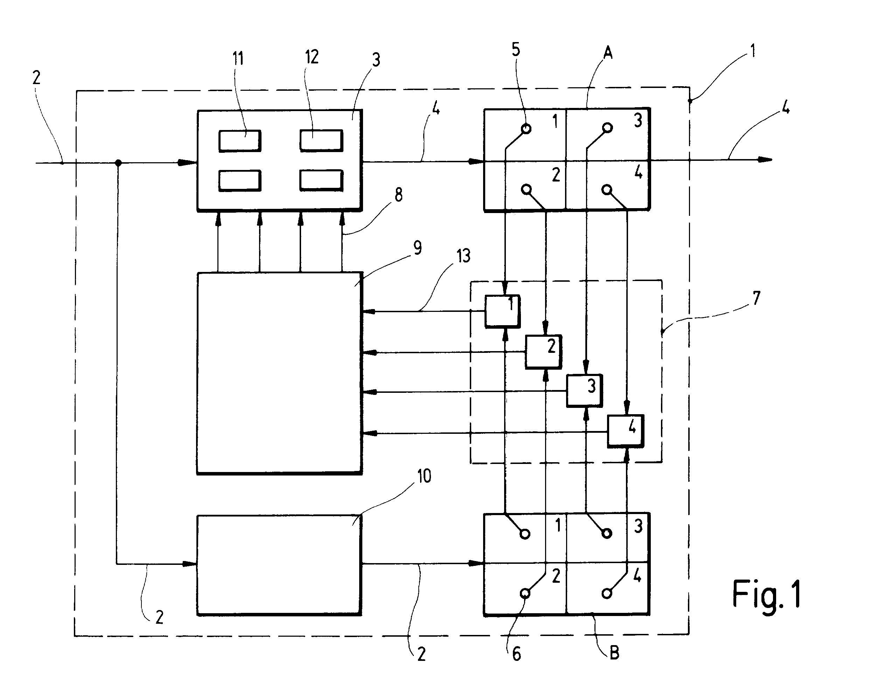

In Fig. 1 ist ein erfindungsgemäßer Equalizer gemäß einer bevorzugten Ausführungsform in seiner Gesamtheit mit dem Bezugszeichen 1 gekennzeichnet. Der Equalizer 1 dient zum Entzerren eines elektrischen Signals 2 in Übertragungssystemen mit hohen Bitraten. Mittels des erfindungsgemäßen Equalizers 1 können elektrische Signale 2 mit Bitraten im Bereich von mehreren 10 Gbit/sec entzerrt werden. Der Equalizer 1 arbeitet im Bereich der elektrischen Übertragungsstrecke des Übertragungssystems.

Der Equalizer 1 weist eine Entzerrungseinheit 3 auf, die das elektrische Signal 2 entzerrt. Das entzerrte elektrische Signal 4 wird in einen ersten Monitor A geführt, der das Augenmuster des entzerrten Signals 4 an mehreren Messpunkten 5 gleichzeitig misst. Der Equalizer 1 weist außerdem einen zweiten Monitor B auf, der das Augenmuster des elektrischen Signals 2 an mehreren Messpunkten 6 gleichzeitig misst. In einer Vergleichseinheit 7 des Equalizers 1 werden die Messergebnisse der Meßpunkte 5, 6 des ersten Monitors A und des zweiten Monitors B miteinander verglichen und ein Vergleichsignal 13 erzeugt. Das Vergleichsignal 13 wird an eine Stelleinheit 9 des Equalizers 1 geleitet, die die Entzerrungseinheit 3 in Abhängigkeit von dem Vergleichsignal 13 ansteuert. Der Equalizer 1 weist schließlich eine Verzögerungseinheit 10 auf, die das elektrische Signal 2 zeitlich verzögert, bevor es an den zweiten Monitor B gelangt. Die zeitliche Verzögerung des Signals 2 aufgrund der Verzögerungseinheit 10 entspricht der zeitlichen Verzögerung des Signals 2 aufgrund der Entzerrungseinheit 3.

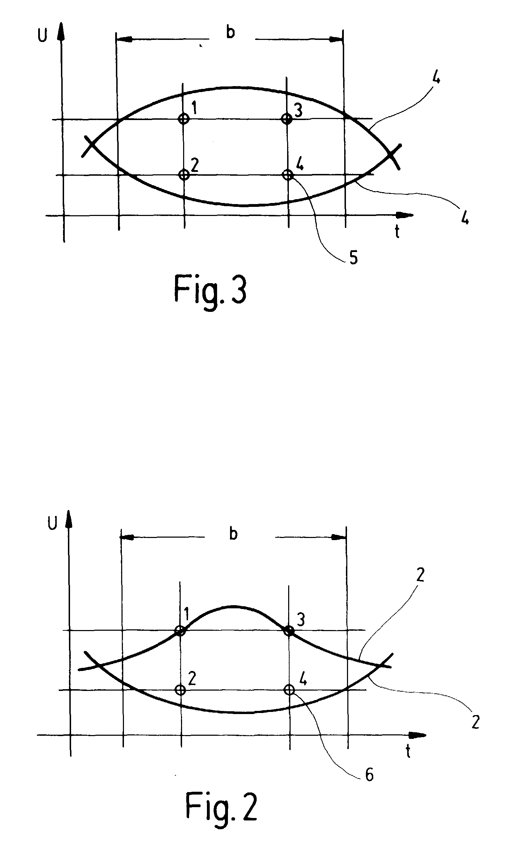

In Fig. 2 ist der Signalverlauf von zwei verzerrten Signalen 2, wie sie an dem zweiten Monitor B anliegen, beispielhaft dargestellt. Eines der dargestellten Signale 2 hat ein Maximum innerhalb der dargestellten Bitperiode b, und das andere hat ein Minimum innerhalb der Bitperiode b. Das Signal 2 mit dem Maximum innerhalb der Bitperiode b entspricht dem binären Wert 1, und das Signal 2 mit dem Minimum entspricht dem binären Wert 0.

In Fig. 3 ist der Signalverlauf von zwei entzerrten Signalen 4 dargestellt, wie sie an dem ersten Monitor A anliegen. Eines der dargestellten Signale 4 weist ein Maximum innerhalb der dargestellten Bitperiode b und das andere Signal 4 ein Minimum auf.

Es ist deutlich zu erkennen, dass die in Fig. 2 dargestellten verzerrten Signale 2 eine wesentlich kleinere Augenöffnung bilden als die in Fig. 3 dargestellten entzerrten Signale 4. Das Ziel einer Entzerrung durch den erfindungsgemäßen Equalizer 1 ist es, die Augenöffnung zu vergrößern, d. h. eine möglichst große Amplitude U und eine möglichst große zeitliche Öffnung Ät des entzerrten Signals 4 zu bewirken. Ein Vergleich der Messergebnisse der Messpunkte 5, 6 in der Vergleichseinheit 7 zeigt, dass das durch das entzerrte Signal 4 gebildete Auge in dem ersten Monitor A einen wesentlich besseren Verlauf aufweist als das durch das verzerrte Signal 2 gebildete Auge in dem zweiten Monitor B.

Die Entzerrungseinheit 3 weist zwei erste Mittel 11 zum Einstellen der Laufzeit des elektrischen Signals 2 und zwei zweite Mittel 12 zum Einstellen der Amplitude des elektrischen Signals 2 auf (vgl. Fig. 1). Die Stelleinheit 9 steuert die ersten Mittel 11 und die zweiten Mittel 12 mittels eines Stellsignals 8 derart an, dass die Differenz zwischen den Messwerten an den Messpunkten 5 und an den Messpunkten 6 so groß wie möglich wird, d. h., dass die Amplitude U möglichst groß und die zeitliche Öffnung Ät möglichst groß wird.

Es ist denkbar, dass der erste Monitor A und der zweite Monitor B einen fünften Messpunkt (nicht dargestellt) aufweisen, der beispielsweise im Mittelpunkt der anderen vier Messpunkte 5 bzw. 6 angeordnet ist. Die Vergleichseinheit 3 könnte dann die Messergebnisse der ersten vier Messpunkte 5 mit dem Messergebnis des fünften Messpunktes des ersten Monitors A und die Messergebnisse der ersten vier Messpunkte 6 mit dem Messergebnis des fünften Messpunktes des zweiten Monitors B vergleichen. Das Vergleichsignal 13 wäre dann abhängig von dem Ergebnis des Vergleichs der Messergebnisse der ersten vier Messpunkte 5, 6 mit dem Messergebnis des fünften Messpunkts des ersten Monitors A und des zweiten Monitors B. Der dem fünften Meßpunkt im Monitor A zugeoerdnete Monitor-Entscheider kann mit dem eigentlichen Daten-Entscheider identisch sein.

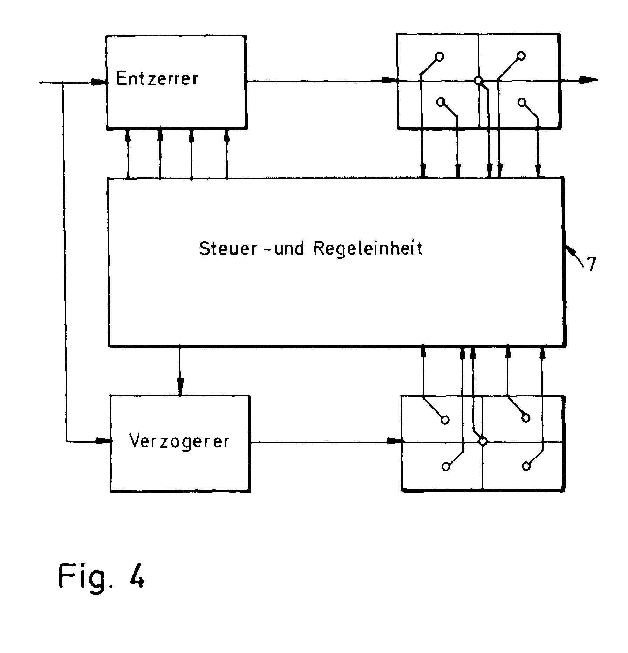

Fig. 4 zeigt einen verallgemeinerte Ausführungsform der Vergleichseinheit 7. Dei vergleichseinheit ist in diesem Fall eine Steuer- und Regeleinheit, die alle vorliegenden Meßergebnisse der Monitore A und B in beliebiger Koombination auswerten kann.

Der gesamte Equalizer 1 ist als eine integrierte Schaltung in SiGe-Technik ausgebildet.

## Patentansprüche

1. Equalizer (1) zum Entzerren eines elektrischen Signals (2) in Übertragungssystemen, **gekennzeichnet durch**
- eine Entzerrungseinheit (3), die das elektrische Signal (2) entzerrt,
- einen ersten Monitor (A), der das entzerrte Signal (4) an mehreren Meßpunkten (5) misst,
- einen zweiten Monitor (B), der das elektrischen Signal (2) an mehreren Meßpunkten (6) misst,
- eine Vergleichseinheit (7) zur Erzeugung mindestens eines Vergleichsignals (13), das abhängig ist von den Meßergebnissen der Meßpunkte (5) des ersten Monitors (A) und von den Meßergebnissen der Meßpunkte (6) des zweiten Monitors (B), und
- eine Stelleinheit (9), die die Entzerrungseinheit (3) in Abhängigkeit von dem Vergleichsignal(13) ansteuert.

2. Equalizer (1) nach Anspruch 1, dadurch gekennzeichnet, dass der erste Monitor (A) den Verlauf des entzerrten Signals (4) an mehreren Meßpunkten (5) gleichzeitig misst.

3. Equalizer (1) nach Anspruch 1 oder 2, dadurch gekennzeichnet, dass der zweite Monitor (B) den Verlauf des elektrischen Signals (2) an mehreren Meßpunkten (6) gleichzeitig misst.

4. Equalizer (1) nach einem der Ansprüche 1 bis 3, dadurch gekennzeichnet, dass der Equalizer (1) eine Verzögerungseinheit (10) aufweist, die das elektrische Signal (2) zeitlich verzögert, bevor es an den zweiten Monitor (B) gelangt.

5. Equalizer (1) nach Anspruch 4, dadurch gekennzeichnet, dass die zeitliche Verzögerung durch die Verzögerungseinheit (10) gleich groß ist wie die zeitliche Verzögerung durch die Entzerrungseinheit (3).

6. Equalizer (1) nach einem der Ansprüche 1 bis 5, dadurch gekennzeichnet, dass der erste Monitor (A) vier auf den Ecken eines Rechtecks angeordnete Meßpunkte (5) aufweist.

7. Equalizer (1) nach einem der Ansprüche 1 bis 6, dadurch gekennzeichnet, dass der zweite Monitor (B) vier auf den Ecken eines Rechtecks angeordnete Meßpunkte (6) aufweist.

8. Equalizer (1) nach Anspruch 6 und 7, dadurch gekennzeichnet, daß die Vergleichseinheit (7) Mittel zum Vergleich der Meßergebnisse der Meßpunkte (5) des ersten Monitors (A) mit den Meßergebnissen der Meßpunkte (6) des zweiten Monitors (B) aufweist.

9. Equalizer (1) nach Anspruch 8, dadurch gekennzeichnet, dass der Vergleich der Meßergebnisse der Meßpunkte (5) des ersten Monitors (A) mit den Meßergebnissen der entsprechenden Meßpunkte (6) des zweiten Monitors (B) zeitgleich erfolgt.

10. Equalizer (1) nach Anspruch 8 oder 9, dadurch gekennzeichnet, dass das Vergleichsignal(13) abhängig ist von dem Ergebnis des Vergleichs der Meßergebnisse der Meßpunkte (5) des ersten Monitors (A) mit den Meßergebnissen der entsprechenden Meßpunkte (6) des zweiten Monitors (B).

11. Equalizer (1) nach einem der Ansprüche 6 bis 10, dadurch gekennzeichnet, dass der erste Monitor (A) und der zweite Monitor (B) einen fünften Meßpunkt aufweisen, der im Mittelpunkt der anderen vier Meßpunkte (5; 6) angeordnet ist.

12. Equalizer (1) nach Anspruch 11, dadurch gekennzeichnet, dass die Vergleichseinheit (7) Mittel zum Vergleich der Meßergebnisse der ersten vier Meßpunkte (5) mit dem Meßergebnis des fünften Meßpunktes des ersten Monitors (A) und Mittel zum Vergleich der Meßergebnisse der ersten vier Meßpunkte (6) mit dem Meßergebnis des fünften Meßpunktes des zweiten Monitors (B) aufweist.

13. Equalizer (1) nach Anspruch 12, dadurch gekennzeichnet, dass der Vergleich der Meßergebnisse der ersten vier Meßpunkte (5; 6) mit dem Meßergenis des fünften Meßpunkts zeitgleich in dem ersten Monitor (A) und in dem zweiten Monitor (B) erfolgt.

14. Equalizer (1) nach Anspruch 12 oder 13, dadurch gekennzeichnet, dass der Vergleich der Meßergebnisse der ersten vier Meßpunkte (5; 6) mit dem Meßergebnis des fünften Meßpunkts in dem ersten Monitor (A) und in dem zweiten Monitor (B) zeitgleich erfolgt.

15. Equalizer (1) nach einem der Ansprüche 12 bis 14, dadurch gekennzeichnet, dass das Vergleichsignal(13) abhängig ist von dem Ergebnis des Vergleichs der Meßergebnisse der ersten vier Meßpunkte (5; 6) mit dem Meßergebnis des fünften Meßpunkts des ersten Monitors (A) und des zweiten Monitors (B).

16. Equalizer (1) nach einem der Ansprüche 1 bis 15, dadurch gekennzeichnet, dass die Entzerrungseinheit (3) erste Mittel (11) zum Einstellen der Laufzeit (Ät) des elektrischen Signals (2) und zweite Mittel (12) zum Einstellen der Amplitude (U) des elektrischen Signals (2) aufweist, wobei die Stelleinheit (9) die ersten Mittel (11) und die zweiten Mittel (12) mittels eines Stellsignals (8) ansteuert.

17. Equalizer (1) nach Anspruch 16, dadurch gekennzeichnet, dass die Entzerrungseinheit (3) dritte Mittel zum Aufspalten des elektrischen Signals (2) in ein Grundsignal und in ein Korrektursignal aufweist, dass durch die ersten Mittel (11) die Laufzeit (Ät) des Korrektursignals und durch die zweiten Mittel (12) die Amplitude (U) des Korrektursignals einstellbar ist, und dass die Entzerrungseinheit (3) vierte Mittel zum Addieren des Korrektursignals mit eingestellter Laufzeit (Ät) und eingestellter Amplitude (U) zu dem Grundsignal aufweist.

18. Equalizer (1) nach einem der Ansprüche 16 oder 17, dadurch gekennzeichnet, dass die Entzerrungseinheit (3) zwei erste Mittel (11) aufweist.

19. Equalizer (1) nach einem der Ansprüche 16 bis 18, dadurch gekennzeichnet, dass die Entzerrungseinheit zwei zweite Mittel (12) aufweist.

20. Equalizer (1) nach einem der Ansprüche 1 bis 19, dadurch gekennzeichnet, dass die Stelleinheit (9) die Entzerrungseinheit (3) derart ansteuert, dass die Augenöffnung des entzerrten Signals (4) möglichst groß ist.

21. Equalizer (1) nach Anspruch 20, sofern auf Anspruch 10 rückbezogen, dadurch gekennzeichnet, dass die Stelleinheit (9) die Entzerrungseinheit (3) derart ansteuert, dass der Betrag der Differenz der Meßergebnisse der Meßpunkte (5) des ersten Monitors (A) und der Meßergebnisse der entsprechenden Meßpunkte (6) des zweiten Monitors (B) möglichst groß ist.

22. Equalizer (1) nach einem der Ansprüche 1 bis 21, dadurch gekennzeichnet, dass der Equalizer (1) als eine integrierte Schaltung ausgebildet ist.
